# EUROPEAN PATENT SPECIFICATION

(11) **EP 3 395 534 B1**
(45) Date of publication and mention of the grant of the patent: **27.04.2022**
(21) Application number: 18167675.0
(22) Date of filing: 17.04.2018
(51) Int. Cl.: B29C 45/27, H02K 15/03

(54) **MANUFACTURING METHOD OF LAMINATED CORE AND CULL PLATE**
VERFAHREN ZUR HERSTELLUNG EINES LAMINIERTEN KERNS UND ANGUSSPLATTE
PROCÉDÉ DE FABRICATION DE NOYAU LAMINÉ ET PLAQUE DU CULLOT

(30) Priority: 24.04.2017 JP 2017085227
(43) Date of publication of application: 31.10.2018
(73) Proprietor: Mitsui High-Tec, Inc., Kitakyushu-shi, Fukuoka 807-8588 (JP)
(72) Inventor: ISHIMATSU, Hisatomo, Kitakyushu-shi, Fukuoka, 807-8588 (JP)
(74) Representative: Hoefer & Partner Patentanwälte mbB

(56) References cited:
- WO-A1-2016/147211
- JP-A- 2015 126 671
- US-A- 3 366 995
- US-A- 4 299 372
- US-A1- 2007 128 307
- US-A1- 2013 309 341
- US-A1- 2015 061 445

## Description

### BACKGROUND OF THE INVENTION

### 1. Field of the Invention

The present invention relates to a manufacturing method of a laminated core and a cull plate which is used in the manufacturing method.

### 2. Description of the Related Art

There is known a manufacturing method of a laminated core in which a plurality of magnet-insert holes are provided in the laminated core body, a resin is injected into the magnet-insert holes and solidified after permanent magnets are inserted to the magnet-insert holes, and the permanent magnets are fixed to the laminated core body. In this manufacturing method, the laminated core body with the permanent magnet inserted in the magnet-insert hole is held between an upper die and a lower die, and the resin is injected into the magnet-insert hole from a resin reservoir part which is provided in the upper die or the lower die. The laminated core body is formed by laminating iron core pieces which are formed by punching an electromagnetic steel sheet.

However, when a die comes into direct contact with the laminated core body and the filling of the resin is performed, the resin solidified in the surface of the laminated core body (that is, resin dregs) is left. Therefore, there is a need to perform a process of removing the resin dregs after filling with the resin. Accordingly, an efficiency of manufacturing the laminated core is degraded. In order to solve the problem, there is known a method of interposing a cull plate between the die and the laminated core body to prevent the resin dregs from being attached.

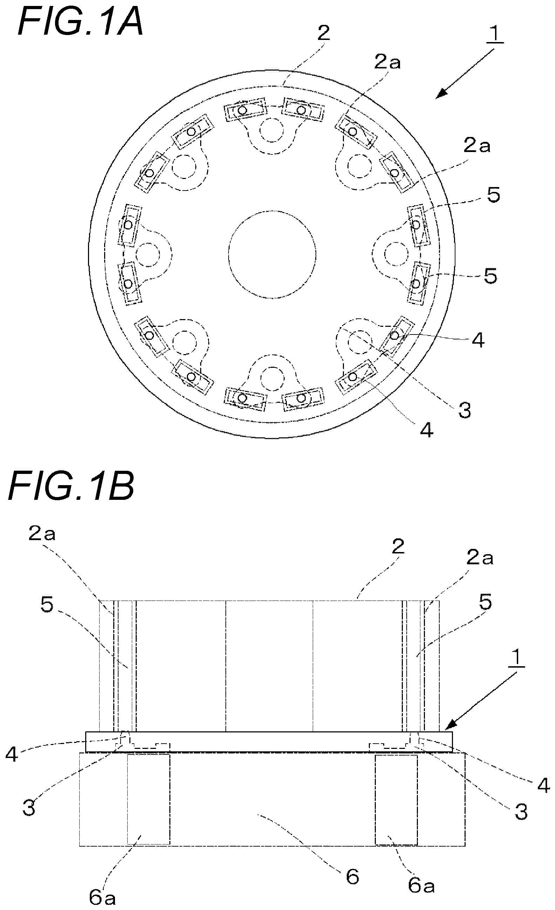

JP-A-2012-165574 as Patent Literature 1 discloses a resin filling device in which a cull plate is held between a lower die and a laminated core, and a magnet-insert hole of the laminated core is filled with a resin from a resin reservoir part of the lower die through the cull plate (Fig. 1). In JP-A-2012-165574, a member corresponding to the cull plate is called a gate plate. In JP-A-2012-165574, there is a description about that the gate plate is usable as a carrying pallet (Paragraph [0039]). In other words, the laminated core is carried to the resin filling device in a state of being mounted on the gate plate. The laminated core is carried out of the resin filling device in a state of being mounted on the gate plate.

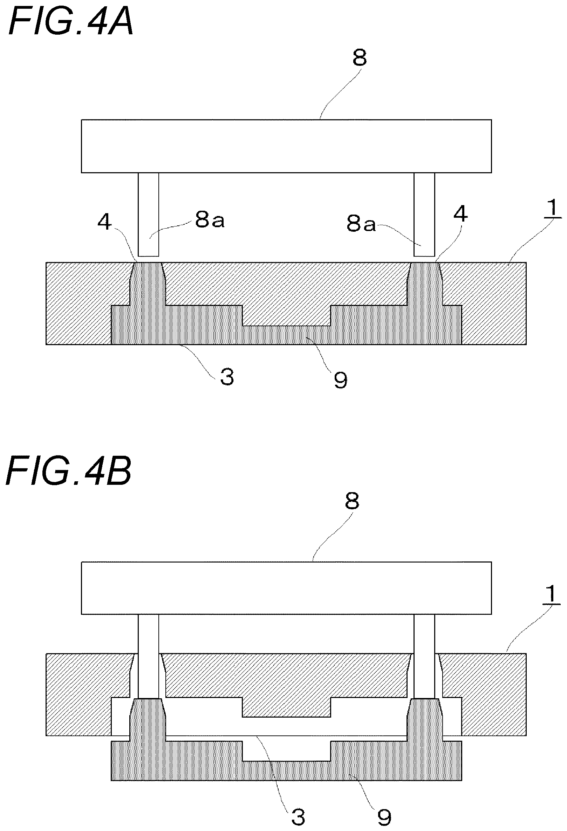

A discharge port is disposed in the gate plate to face an opening of a magnet-insert hole of the laminated core. The discharge port passes through from the lower surface to the upper surface of the gate plate, and is formed such that the inner diameter becomes small as it goes from the lower surface to the upper surface (Paragraph [0021], Fig. 4). In other words, the discharge port is tapered at the upper end to make the inner diameter small. Therefore, when the gate plate is separated from the laminated core after filling with the resin, stress is focused on the resin in the upper end of the discharge port, and the resin is broken. As a result, the resin solidified in the magnet-insert hole of the laminated core and the resin left and solidified in the discharge port are separated (Paragraph [0034]). The separation from the laminated core of the gate plate is performed after the gate plate and the laminated core are carried out of the resin filling device (Paragraph [0038]).

Patent Literature 1: JP-A-2012-165574

### SUMMARY OF THE INVENTION

As described above, in the manufacturing method of the laminated core disclosed in JP-A-2012-165574, the laminated core is carried out of the resin filling device in a state of being mounted on the cull plate (gate plate). The separation from the laminated core of the cull plate (gate plate) is performed outside the resin filling device.

However, in the manufacturing method of the laminated core disclosed in JP-A-2012-165574, the laminated core and the cull plate are carried out of the resin filling device after the resin is sufficiently solidified. Therefore, the resin left in the discharge port of the cull plate may be peeled off from the resin filling the magnet-insert hole at an unintended timing. For example, when the laminated core and the cull plate are still in the resin filling device, the resin left in the discharge port is peeled off from the resin filling the magnet-insert hole, and further separated from the cull plate to fall into the lower die.

When the resin left in the discharge port falls into the lower die, manpower and time are required to remove the fallen resin. Therefore, a productivity of the laminated core is reduced. If the laminated core is maintained to be manufactured while overlooking that the resin falls down into the lower die, the quality of products is degraded, or there is a possibility to cause a failure of the resin filling device. In this way, according to the manufacturing method of the laminated core in the related art, the resin left in the discharge port is separated from the cull plate and falls down at an unintended timing. As a result, the productivity is reduced, the quality of products is degraded, or there is a possibility to cause a failure of the device.

Document US 2015 / 061445 A1 discloses a manufacturing process for a rotor such that the rotor comprises permanent magnets and includes a laminated core body having a shaft hole in the center thereof and magnet insertion holes around the shaft hole; permanent magnets disposed in the respective magnet insertion holes; and first and second end face plates disposed on one axial end and the other axial end of the laminated core body, respectively, the first and second end face plates including first and second through holes, respectively. The first and second through holes each overlap a contour of a magnet insertion hole on a radially inner side or a radially outer side in a plan view, and have first and second tapered portions gradually expanding the diameter toward the magnet insertion hole, respectively..

Document US 4 299 372 A suggests a sprue-gate configuration embodied in one of the cavity-defining parts of a multiple-part mold for injection molding of plastic articles. At the gate region of sprue discharge into the cavity, the sprue converges into communication with a cluster of restricted-gate orifices which are in closely spaced, angularly distributed relation about the generally central axis of the sprue. The combined area of the restricted-gate orifices may be less than the area of a conventional single-orifice gate serving a cavity of the same size.

Document US 3 366 995 A considers a mold for injection moulding a rotor having a ring of sintered, oxidic, ferromagnetic material immovably supported on a body of synthetic polymeric material conaprising means defining a closed mould cavity, said cavity having said ring disposed therein, said cavity having a cross sectional dimension greater than the diameter of Eaid ring, means projecting into said cavity for engaging said ring spaced from the walls of said mould defining said cavity, a first inlet duct in said mould communicating with the portion of said cavity surrounding the exterior surface of said ring and a second inlet duct in said mold communicating with the portion of said cavity within the interior of said ring.

Document US 2007 / 128307 A1 proposes a mold used in a manufacturing process of a rotor of an electric motor, the rotor including a rotor core with a plurality of magnet-retaining apertures and a plurality of permanent magnets individually retained in the magnet-retaining apertures of the rotor core, for pouring a resinous material into gaps defined between the magnet-retaining apertures and the permanent magnets. The mold includes a cavity for accommodating the rotor core at a predetermined position, with the rotor core receiving the permanent magnets individually in the magnet-retaining apertures; and a deformation inhibiting surface provided in the cavity and coming into at least local contact with an outer circumferential surface of the rotor core, during a period when the resinous material is poured into the gaps, to inhibit the bulging deformation of the outer circumferential surface.

Document JP 2015 126671 A discloses a manufacturing method of a rotor laminated core allowing man-hour and facility costs to be reduced. A resin residue is cut off from a laminated core and adheres to a runner plate, and the resin residue can be extruded from a lower die by a plunger by pushing up a transportation tray by an ejector and spacing the laminated core together with the magnet receiving plate apart from the runner plate. Accordingly, a step and a device for taking out the laminated core from the transportation tray and a step and a device for removing the resin residue adhering to the transportation tray can be eliminated, and man-hour and facility costs can be reduced.

The present invention has been made in view of the problems, and an object thereof is to provide a manufacturing method of a laminated core in which a magnet-insert hole of a laminated core body is filled with a resin through a cull plate in order to prevent the resin left in the cull plate after filling with the resin from falling from the cull plate. Another object is to provide a cull plate which is used in the manufacturing method.

The object underlying the present invention is achieved by a manufacturing method according to independent claim 1 and by a cull plate according to independent claim 6. Preferred embodiments are defined in the respective dependent claims.

An aspect of the present invention provides a manufacturing method of a laminated core, including: holding a laminated core body mounted on a cull plate between an upper die and a lower die which are provided in a resin filling device; injecting a resin to a magnet-insert hole of the laminated core body from a resin reservoir part provided in the lower die through a resin injection path of the cull plate; then ejecting the laminated core body and the cull plate from the resin filling device; separating the cull plate from the laminated core body; and then ejecting the resin solidified in the resin injection path of the cull plate, wherein the cull plate includes a through hole which forms at least a part of the injection path extended from the resin reservoir part to an upper surface of the cull plate, and the through hole of the cull plate includes a tapered portion and a straight pipe portion being adjacent to the tapered portion, wherein the tapered portion has an inner diameter gradually
decreasing toward the upper surface of the cull plate, and the straight pipe portion has a constant inner diameter in a height direction.

Another aspect of the present invention provides a cull plate which is held between a laminated core body and a lower die of a resin filling device in a process where the laminated core body with a permanent magnet inserted into a magnet-insert hole is held between an upper die and the lower die of the resin filling device to inject a resin from a resin reservoir part of the lower die to the magnet-insert hole, the cull plate including: a through hole which forms at least a part of a flow path extended from the resin reservoir part to an upper surface of the cull plate, wherein the through hole includes a tapered portion and a straight pipe portion being adjacent to the tapered portion, wherein the tapered portion has an inner diameter gradually decreasing toward the upper surface of the cull plate, and the straight pipe portion has a constant inner diameter in a height direction.

A part of a through hole of a cull plate according to the aspect of the present invention is formed in a tapered shape, and the other part continued to the tapered part is formed in a straight pipe shape. Therefore, even in a case where the resin left in the through hole is separated from the resin filled in the magnet-insert hole, the resin left in the through hole is held in the through hole by a friction force from the inner wall of the through hole in the part forming the straight pipe shape of the through hole. As a result, the chance of the falling of the resin left in the through hole is decreased. Since the chance of the falling of the resin is decreased, a lowering in a productivity of a laminated core, a lowering in the quality of products, or a failure of a device of manufacturing the laminated core, which are caused by the falling of the resin in a resin filling device, are avoided. As a result, the productivity and the quality of the laminated core are improved, and manufacturing costs are reduced.

### BRIEF DESCRIPTION OF THE DRAWINGS

In the accompanying drawings:
Figs. 1A and 1B illustrate outlines of a cull plate which is used in a manufacturing method of a laminated core according to an embodiment of the present invention, wherein Fig. 1A is a top view of the cull plate and Fig. 1B is a side view of the cull plate;

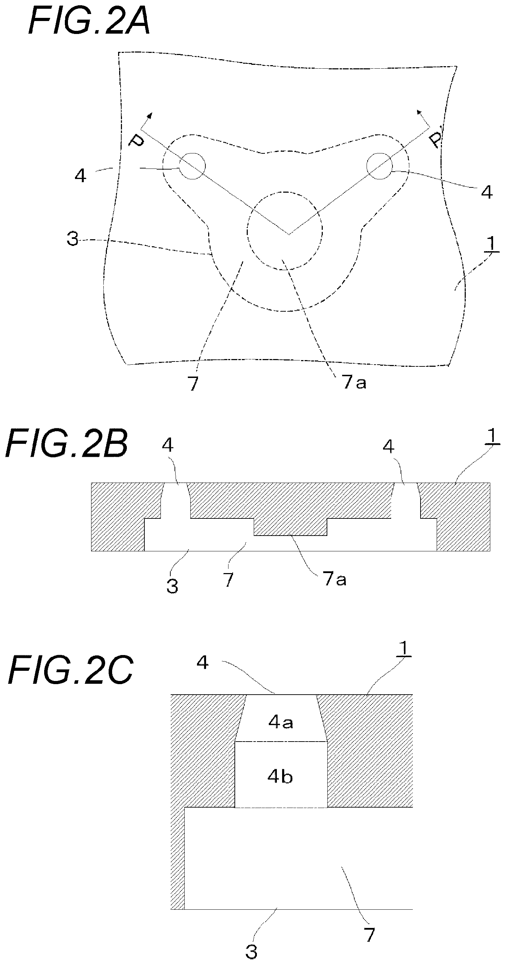

Figs. 2A to 2C are enlarged views illustrating a shape of a gate hole of the cull plate illustrated in Figs. 1A and 1B, wherein Fig. 2A is a top view of the gate hole, Fig. 2B is a cross-sectional view taken along line P-P' in Fig. 2A, and Fig. 2C is an enlarged view illustrating part of the cross-sectional view of Fig. 2B on a magnified scale;

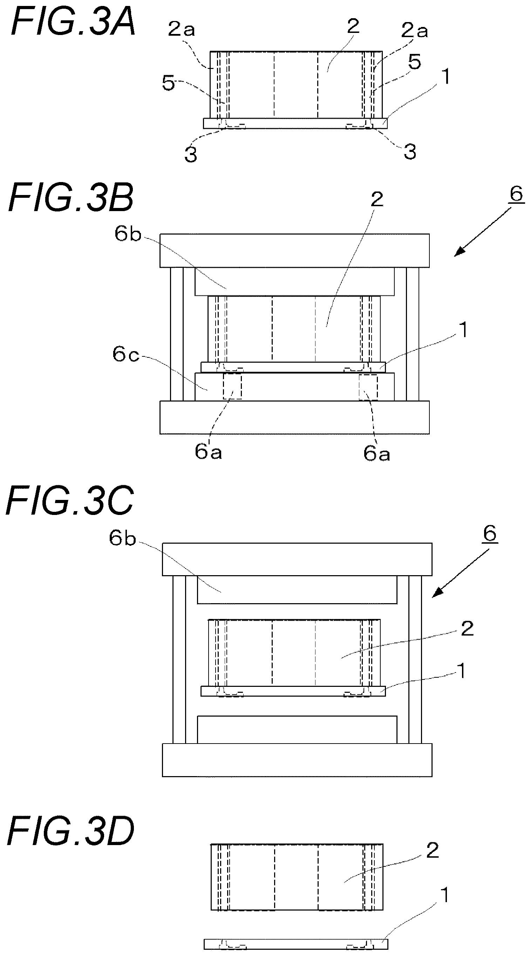

Figs 3A to 3D illustrate a manufacturing method of the laminated core according to the embodiment of the present invention in a time sequential manner, wherein Fig. 3A is a view illustrating a state where a laminated core body is mounted on the cull plate, Fig. 3B is a view illustrating a state where the laminated core body and the cull plate are attached to a resin filling device, Fig. 3C is a view illustrating a state where the laminated core body and the cull plate are separated from an upper die and a lower die after a magnet-insert hole of the laminated core body is filled with a resin, and Fig. 3D is a view illustrating a state where the cull plate is separated from the laminated core body after the laminated core body and the cull plate are ejected from the resin filling device;
Figs. 4A and 4B illustrate a method of removing a cull from the cull plate, wherein Fig. 4A is a view illustrating a state where an extrusion tool is placed in the upper surface of the cull plate, and Fig. 4B is a view illustrating a state where the extrusion tool is pressed down to pull the cull out of the cull plate;

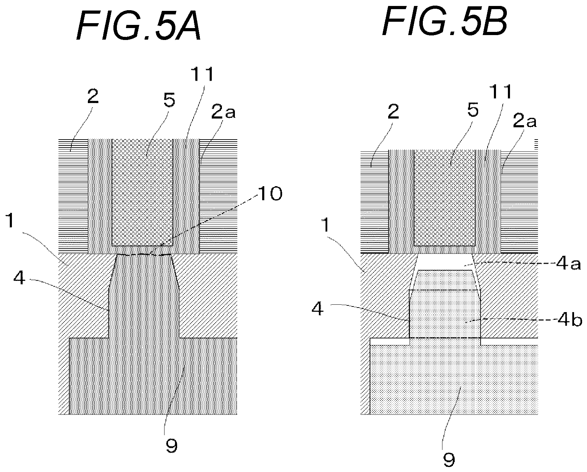

Figs. 5A and 5B illustrate effects achieved by the shape of the gate hole of the cull plate, wherein Fig. 5A is a view illustrating a state before cracks are generated between the resin filled in the magnet-insert hole and the cull left in the gate hole, and Fig. 5B is a view illustrating a state after cracks are generated between the resin and the cull and the resin and the cull are separated;

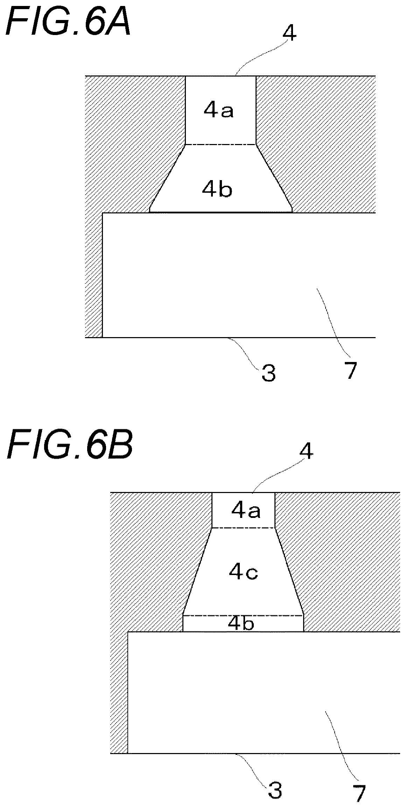

Figs. 6A and 6B are cross-sectional views illustrating the shapes of the gate holes according to first and second modifications of the embodiment of the present invention, respectively;

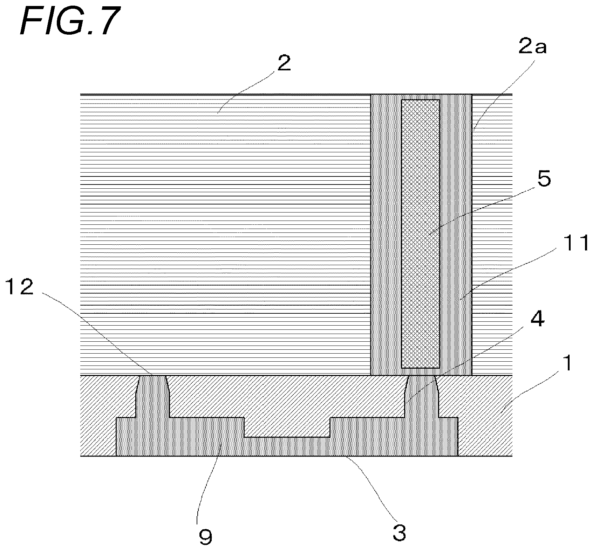

Fig. 7 is a cross-sectional view of the cull plate provided with a blind hole and the laminated core body according to a third modification of the embodiment of the present invention;

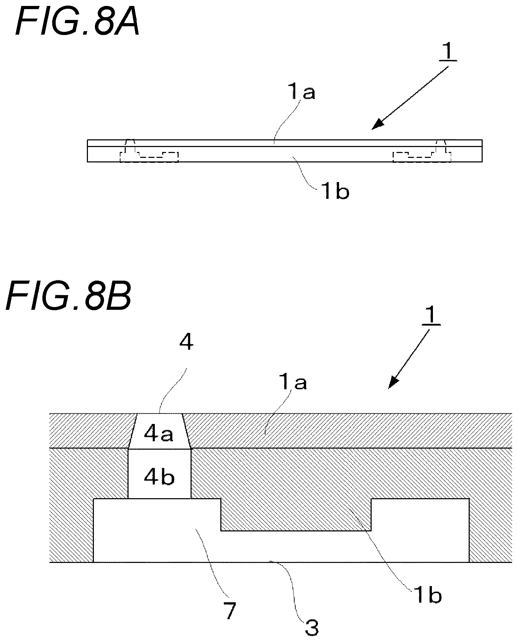

Figs. 8A and 8B illustrate a fourth modification of the embodiment of the present invention, wherein Fig. 8A is a view illustrating two plate members which are overlapped in a vertical direction, and Fig. 8B is a cross-sectional view illustrating part of the cull plate in a magnified scale; and

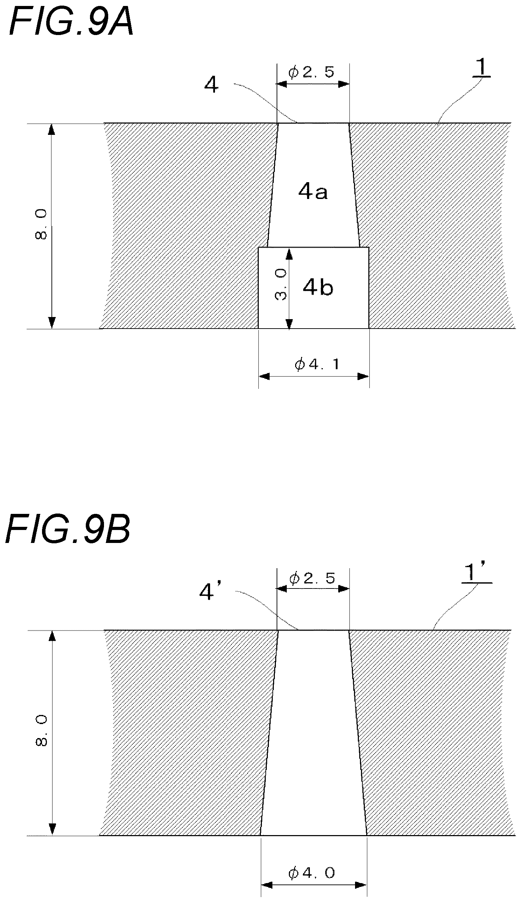

Figs. 9A and 9B illustrate the shapes of the gate holes of the cull plate which is used for a comparison test between the present invention and the related art, wherein Fig. 9A is a cross-sectional view illustrating the shape of the gate hole according to a fifth modification of the embodiment of the present invention, and Fig. 9B is a cross-sectional view illustrating the shape of the gate hole according to the related art.

### DETAILED DESCRIPTION OF THE EXEMPLARY EMBODIMENTS

### Embodiment

Hereinafter, a specific embodiment of the present invention will be appropriately described with reference to the drawings.

Figs. 1A and 1B illustrate an outline of a cull plate 1 which is used in a manufacturing method of a laminated core according to an embodiment of the present invention. Fig. 1A is a top view of the cull plate 1. Fig. 1B is a side view of the cull plate 1.

The cull plate 1 is also used as a carrying tool which carries a laminated core body 2. The laminated core body 2 is mounted on the cull plate 1, and carried between processes. As illustrated in Fig. 1A, eight resin injection paths 3 are annularly disposed in the cull plate 1. Each of the resin injection paths 3 includes two gate holes 4. In other words, sixteen gate holes 4 are formed in the cull plate 1. The gate holes 4 are disposed to be overlapped with sixteen magnet-insert holes 2a formed in the laminated core body 2 in top view (that is, Fig. 1A). A permanent magnet 5 is inserted to the magnet-insert hole 2a.

The resin injection path 3 is used to inject a resin from a resin filling device 6 to the magnet-insert hole 2a of the laminated core body 2. In other words, the resin filled in the magnet-insert hole 2a using the resin filling device 6 is guided to the magnet-insert hole 2a through the resin injection path 3.

Figs. 2A to 2C are enlarged views illustrating the shape of the resin injection path 3. Fig. 2A is a top view of the resin injection path 3. Fig. 2B is a cross-sectional view illustrating the resin injection path 3 taken along line P-P' in Fig. 2A. Fig. 2C is a cross-sectional view illustrating the cross section of the resin injection path 3 illustrated in Fig. 2B in a magnified scale. As illustrated in Figs. 2A and 2B, the resin injection path 3 includes a runner 7 which opens toward the lower surface of the cull plate 1, and the gate hole 4 which opens toward the upper surface of the cull plate

1. The runner 7 is disposed to face a discharge port of a resin reservoir 6a (not illustrated in Figs. 2A to 2C) which is provided in the resin filling device 6 (not illustrated in Figs. 2A to 2C). The gate hole 4 is disposed such that the upper end of the gate hole 4 faces the magnet-insert hole 2a (not illustrated in Figs. 2A to 2C) of the laminated core body 2. The resin stored in the resin reservoir 6a is pressed by a plunger (not illustrated) to flow into the runner 7. The resin flowed in the runner 7 is discharged into the magnet-insert hole 2a through the gate hole 4. In this way, the gate hole 4 forms part of the resin injection path 3. In other words, the gate hole 4 forms part of the flow path from the resin reservoir 6a of the resin filling device 6 to the upper surface of the cull plate 1. The gate hole 4 opens toward the upper surface of the cull plate 1. A convex portion 7a is formed in a portion facing the resin reservoir 6a of the front surface of the base of the runner 7.

As illustrated in Figs. 2B and 2C, an upper portion 4a of the gate hole 4 is formed in a tapered shape of which the inner diameter is reduced as it closes to the upper surface of the cull plate 1. A lower portion 4b of the gate hole 4 is formed in almost a straight pipe shape of which the inner diameter is maintained constant in the height direction. The upper portion 4a and the lower portion 4b are continuously formed. The operational effects achieved by the shape of the gate hole 4 will be described below.

Next, a manufacturing method of the laminated core according to the embodiment will be described in a time sequential manner with reference to Figs. 3A to 3D. In the manufacturing method of the laminated core according to the embodiment, the laminated core body 2 is first mounted on the cull plate 1 as illustrated in Fig. 3A. The permanent magnet 5 is inserted to the magnet-insert hole 2a which is formed in the laminated core body 2 in the previous process (not illustrated). The laminated core body 2 is manufactured by stacking iron core pieces which are formed by punching an electromagnetic steel sheet in the previous process (not illustrated). Next, as illustrated in Fig. 3B, the laminated core body 2 and the cull plate 1 are placed between an upper die 6b and a lower die 6c of the resin filling device 6. The laminated core body 2 and the cull plate 1 are held and pressed by the upper die 6b and the lower die 6c. The lower die 6c of the resin filling device 6 is provided with the resin reservoir 6a and a plunger (not illustrated). Therefore, the resin stored in the resin reservoir 6a is extruded by the plunger. The resin pressed by the plunger flows into the magnet-insert hole 2a through the resin injection path 3.

The magnet-insert hole 2a is filled with the resin. After the resin completely fills the magnet-insert hole 2a, the upper die 6b is pulled up to be separated from the laminated core body 2 as illustrated in Fig. 3C. The laminated core body 2 and the cull plate 1 are pulled up to be separated from the lower die 6c. The laminated core body 2 and the cull plate 1 are ejected from the resin filling device 6. Thereafter, the cull plate 1 is separated from the laminated core body 2 as illustrated in Fig. 3D. Finally, the resin solidified in the resin injection path 3 of the cull plate 1 is ejected. The resin solidified in the resin injection path 3 is called a cull or a resin waste. The cull is discarded.

The ejecting of the cull from the cull plate 1 is performed using an extrusion tool 8 as illustrated in Figs. 4A and 4B. The extrusion tool 8 is provided with an extrusion pin 8a. As illustrated in Fig. 4A, the extrusion pin 8a is placed to abut on the end surface of a cull 9 in the upper surface of the cull plate 1 when viewed from the gate hole 4. When the extrusion tool 8 is pressed down, the cull 9 is extruded from the lower surface of the cull plate 1, and falls to the lower side of the cull plate 1 as illustrated in Fig. 4B.

The operational effects achieved by the shape of the gate hole 4 will be described. Herein, it is assumed that cracks 10 are generated in the resin in the upper end surface of the gate hole 4 as illustrated in Fig. 5A before the cull plate 1 is separated from the laminated core body 2. In other words, it is assumed that the cracks 10 are generated between a resin 11 filled in the magnet-insert hole 2a and the cull 9 left in the resin injection path 3. When the cracks 10 are generated between the resin 11 and the cull 9, a tension force applied from the resin 11 to the cull 9 (that is, a force lifting up the cull 9) disappears. When the tension force disappears, the cull 9 is shrank in the gate hole 4 and displaced to the lower side. As a result, as illustrated in Fig. 5A, the cull 9 of the tapered shape of the upper portion 4a of the gate hole 4 does not come into contact with the inner surface of the gate hole 4. However, even in a case where the cull 9 is shrank to the lower side, the cull 9 and the inner surface of the gate hole 4 come into contact with each other in a portion of the straight pipe shape of the lower portion 4b of the gate hole 4. The cull 9 is prevented from falling down by a friction force applied on the cull 9 in the portion.

In this way, according to the cull plate 1 of the embodiment, the cull 9 is prevented from falling down at an unintended timing (for example, a timing illustrated in Fig. 3C). In other words, the cull 9 is prevented from falling down toward the lower die 6c of the resin filling device 6.

### First and Second modifications

The shape of the gate hole 4 is not limited to that described in the above embodiment (that is, the upper portion 4a is made in the tapered shape, and the lower portion 4b is formed in the straight pipe shape). As illustrated in Fig. 6A, the gate hole 4 may be configured such that the upper portion 4a is made in the straight pipe shape, and the lower portion 4b is formed in the tapered shape. Alternatively, as illustrated in Fig. 6B, the gate hole 4 may be configured such that the upper portion 4a is made in the straight pipe shape, an intermediate part 4c is made in the tapered shape, and the lower portion 4b is made in the straight pipe shape.

### Third modification

In the above embodiment and the modifications, a portion formed in the tapered shape and a portion formed in the straight pipe shape are provided, and the gate hole 4 has been exemplified as a specific example of a through hole to prevent the cull 9 from falling down. However, the through hole is not limited to the gate hole 4. The through hole may be a blind hole 12 which is not connected to the magnet-insert hole 2a of the laminated core body 2 illustrated in Fig. 7. Similarly to the gate hole 4, the blind hole 12 is used when the cull 9 is ejected using the extrusion tool 8 illustrated in Figs. 4A and 4B.

### Fourth modification

In the above embodiment and the modifications, the cull plate 1 has been exemplified as a single plate member. However, the cull plate 1 is not limited to the above configuration. As illustrated in Fig. 8A, the cull plate 1 may be formed by overlapping an upper plate 1a and a lower plate 1b. As illustrated in Fig. 8B, the upper plate 1a is a plate member which forms the upper portion 4a of the gate hole 4 (that is, a portion forming the tapered shape). The lower plate 1b is a plate member which forms the lower portion 4b of the gate hole 4 (that is, a portion forming the straight pipe shape). In other words, the gate hole 4 which is provided with the portion forming the tapered shape and the portion forming the straight shape is formed by overlapping the upper plate 1a and the lower plate 1b.

### Comparison to the Related Art

Fig. 9A is a cross-sectional view illustrating a shape of the gate hole 4 which is provided in the resin injection path 3 (not illustrated) formed in the cull plate 1 according to a fifth modification of the embodiment of the present invention. Fig. 9B is a cross-sectional view illustrating a shape of a gate hole 4' which is provided in the resin injection path 3 (not illustrated) formed in a cull plate 1' according to the related art.

As a result of measuring a necessary load to push off the cull 9 (not illustrated) left in the resin injection path 3 (not illustrated) provided with two gate holes 4 illustrated in Fig. 9A in the cull plate 1 according to the fifth modification using the extrusion tool 8 illustrated in Figs. 4A and 4B, it has been found out that a load of 100 to 200 N is necessary. Similarly, it has been found out that a load of 30 to 40 N is sufficient to pull off the cull 9 (not illustrated) left in the resin injection path 3 (not illustrated) provided with two gate holes 4' illustrated in Fig. 9B in the cull plate 1' according to the related art. In this way, a holding force of the cull 9 caused by the gate hole 4 according to the fifth modification is larger than that of the cull 9 caused by the gate hole 4' according to the related art. In other words, the gate hole 4 according to the fifth modification can be made such that the cull 9 hardly falls compared to the gate hole 4' according to the related art. As illustrated in Fig. 9A, the gate hole 4 may have a step in a boundary between the upper portion 4a and the lower portion 4b.

Hitherto, in the above embodiment described above, the upper portion 4a of the gate hole 4 of the cull plate 1 used in the manufacturing method of the laminated core is formed as a tapered portion, and the lower portion 4b is formed as a straight pipe portion. Therefore, even when the cull 9 left in the resin injection path 3 is separated from the resin 11 filled in the magnet-insert hole 2a and thus the cull 9 in the gate hole 4 is displaced downward, the contact between the cull 9 and the inner surface of the gate hole 4 is maintained in the lower portion 4b. The cull 9 is prevented from falling down by a friction force applied in the cull 9 in the portion. In this way, according to the above embodiment, the falling of the cull 9 left in the gate hole 4 is minimized.

The above effect is also achieved even in a case where the shape of the gate hole 4 is formed as those illustrated in the first and second modifications. In other words, the shape of the gate hole 4 is not limited to those exemplified in the above embodiment. As illustrated in the third modification, the through hole provided with the tapered portion and the straight pipe portion is not limited to the gate hole 4. The through hole may be the blind hole 12. In other words, the above effect is achieved even when the blind hole 12 is provided with the tapered portion and the straight pipe portion. As illustrated in the fourth modification, the gate hole 4 is easily processed by dividing the cull plate 1 into the upper plate 1a and the lower plate 1b which are overlapped to form the cull plate 1. Therefore, the cull plate 1 is easily manufactured. After manufacturing the laminated core, the upper plate 1a and the lower plate 1b can be separated from each other and cleansed. Therefore, the cleansing of the cull plate 1 becomes easy. The assembly of the upper plate 1a and the lower plate 1b can be changed according to properties of the resin and processing conditions on the basis of a plurality of types of the upper plates 1a different in dimensions and shapes of the upper portion 4a and a plurality of types of the lower plates 1b different in dimensions and shapes of the lower portion 4b.

The technical scope of the present invention is not limited to the embodiment and the modifications. Various applications, modifications, or improvements may be made in a scope of the technical scope disclosed in claims of the present invention.

The shapes of the gate hole 4 and the blind hole 12 illustrated in the embodiment (that is, the shape of the through hole) are described as merely exemplary. The technical scope of the present invention is not limited to the shapes of the gat hole 4 and the blind hole 12 illustrated in the embodiment. The through hole is not limited to the configuration that the boundary between the tapered portion and the straight pipe portion has the same inner diameter. There may be a difference between the diameters of these two portions. For example, in the gate hole 4 illustrated in Fig. 2C, the inner diameter of the lower portion 4b may be larger than that of the lower end of the upper portion 4a.

As illustrated in Figs. 2A and 2B, in a case where the plurality of gate holes 4 are provided in one resin injection path 3 (that is, a case where the plurality of through holes are provided in one resin injection path 3), the tapered portion and the straight pipe portion are not necessarily provided in the through hole. As long as the object of the present invention to minimize the falling of the cull 9 can be achieved, some through holes may be provided with the tapered portions and the other through holes may be provided with the straight pipe portion. At least one of the plurality of through holes may be provided with only the tapered portion or the straight pipe portion. In the resin injection path 3, the convex portion 7a is not an essential component. In other words, the resin injection path 3 may be not provided with the convex portion 7a.

The present invention is not limited to the configuration that two gate holes 4 (that is, the through holes) are formed in one resin injection path 3. One gate hole 4 may be formed in one resin injection path 3. Three or more gate holes 4 may be formed in one resin injection path 3. As described above, the through hole is not limited to the gate hole 4. The through hole may be the blind hole 12. Therefore, the plurality of gate holes 4 and blind holes 12 may be formed in one resin injection path 3.

The shape and the configuration of the laminated core body 2 illustrated in Figs. 1A and 1B are given as merely exemplary for the laminated core which is manufactured using the cull plate 1. The technical scope of the present invention is not limited to the shape and the configuration of the laminated core body 2. The present invention is applied to the manufacturing of the laminated core which has various shapes, configurations, and usages.

The resin filling device 6 illustrated in Figs. 3B and 3C is given as merely exemplary for a device used in the manufacturing of the laminated core. The technical scope of the present invention is not limited to the resin filling device 6 illustrated in the drawings.

The extrusion tool 8 illustrated in Figs. 4A and 4B is given as merely exemplary for a part to eject the cull 9 from the cull plate 1. The technical scope of the present invention is not limited to the extrusion tool 8 illustrated in the drawings.

In Figs. 8A and 8B, the tapered portion is formed in the upper portion 4a of the gate hole 4 formed in the upper plate 1a, the straight pipe portion is formed in the lower portion 4b of the gate hole 4 formed in the lower plate 1b. The upper plate 1a and the lower plate 1b are not limited to the above configuration. In a case where the cull plate 1 is provided with the gate hole 4 as illustrated in Fig. 6A, the straight pipe portion is formed in the upper plate 1a, and the tapered portion is formed in the lower plate 1b.

The type of resin filling the magnet-insert hole 2a is not limited. A thermoplastic resin may be used, or a thermosetting resin may be used.

The present invention may be preferably employed to a manufacturing method of the laminated core and a cull plate used in the method.

The following is a list of the reference numerals and signs corresponding to some elements of the embodiment in the drawings.
1, 1': Cull plate
1a: Upper plate
1b: Lower plate
2: Laminated core body
2a: Magnet-insert hole
3: Resin injection path
4, 4': Gate hole
4a: Upper portion
4b: Lower portion
4c: Intermediate part
5: Permanent magnet
6: Resin filling device
6a: Resin reservoir
6b: Upper die
6c: Lower die
7: Runner
7a: Convex portion
8: Extrusion tool
8a: Extrusion pin
9: Cull
10: Cracks
11: Resin
12: Blind hole

## Claims

1. A manufacturing method of a laminated core (2),
comprising:
- holding a laminated core body (2) mounted on a cull plate (1) between an upper die (6b) and a lower die (6c) which are provided in a resin filling device (6);
- injecting a resin (11) to a magnet-insert hole (2a) of the laminated core body (2) from a resin reservoir part (6a) provided in the lower die (6c) through a resin injection path (3) of the cull plate (1); then
- ejecting the laminated core body (2) and the cull plate (1) from the resin filling device (6); then
- separating the cull plate (1) from the laminated core body (2); and then
- ejecting the resin (11) solidified in the resin injection path (3) of the cull plate (1),
wherein:
- the cull plate (1) includes at least one through hole (4; 12) which forms at least a part of the resin injection path (3) extended from the resin reservoir part (6a) to an upper surface of the cull plate (1),
- the at least one through hole (4; 12) of the cull plate (1) include a tapered portion (4a) and a straight pipe portion (4b) being adjacent to the tapered portion (4a), wherein the tapered portion (4a) has an inner diameter gradually decreasing toward the upper surface of the cull plate (1), and the straight pipe portion (4b) has a constant inner diameter in a height direction.

2. The manufacturing method of the laminated core (2) according to claim 1, wherein the at least one through hole (4; 12) includes a gate hole (4) from which the resin (11) injected from the resin reservoir part (6a) to the magnet-insert hole (2a) is discharged toward the magnet-insert hole (2a).

3. The manufacturing method of the laminated core (2) according to claim 2, wherein the at least one through hole (4; 12) further includes a blind hole (12) in which a discharge port is closed by the laminated core body (2) in a case where the laminated core body (2) is mounted on the cull plate (1).

4. The manufacturing method of the laminated core according to any one of claims 1 to 3, wherein the cull plate (1) is formed by overlapping two plate members (1a, 1b) in a vertical direction, the tapered portion (4a) is formed in one of the plate members (1a, 1b), and the straight pipe portion (4b) is formed in the other plate member (1a, 1b).

5. The manufacturing method of the laminated core (2) according to any one of claims 1 to 4, wherein:
- the cull plate (1) includes a plurality of through holes (4; 12), and
- at least one of the plurality of through holes (4; 12) includes only a tapered portion (4a) having an inner diameter gradually decreasing toward the upper surface of the cull plate (1), or a straight pipe portion (4b) having a constant inner diameter in a height direction.

6. A cull plate (1),
- which is configured in order to be used in a method according to any one of the preceding claims and in order to be held between a laminated core body (2) and a lower die (6c) of a resin filling device (6) in a process where the laminated core body (2) with a permanent magnet (5) inserted into a magnet-insert hole (2a) is held between an upper die (6b) and the lower die (6c) of the resin filling device (6) to inject a resin (11) from a resin reservoir part (6a) of the lower die (6c) to the magnet-insert hole (2a),
- the cull plate (1) comprising at least one through hole (4; 12) which forms at least a part of a resin injection path (3) extended from the resin reservoir part (6a) to an upper surface of the cull plate (1),
wherein:
- the at least one through hole (4; 12) include a tapered portion (4a) and a straight pipe portion (4b) being adjacent to the tapered portion (4a),
- the tapered portion (4a) has an inner diameter gradually decreasing toward the upper surface of the cull plate (1),
- the straight pipe portion (4b) has a constant inner diameter in a height direction,
- the cull plate (1) additionally comprises a runner (7) which opens toward a lower surface of the cull plate (1) and forms a part of the resin injection path (3) extended from the resin reservoir part (6a) to be continuous to the at least one through hole (4; 12),
- the cull plate (1) includes two plate members (1a, 1b) overlapped in a vertical direction,
- the tapered portion (4a) is formed in one of the plate members (1a, 1b), and
- the straight pipe portion (4b) is formed in the other plate member (1a, 1b).

7. The cull plate (1) according to claim 6, wherein the at least one through hole (4; 12) includes a gate hole from which the resin (11) injected from the resin reservoir part (6a) to the magnet-insert hole (2a) is discharged toward the magnet-insert hole (2a).

8. The cull plate (1) according to claim 6, wherein the at least one through hole (4; 12) further includes a blind hole (12) in which a discharge port is closed by the laminated core body (2) in a case where the laminated core body (2) is mounted on the cull plate (1).

9. The cull plate (1) according to any one of claims 6 to 8, wherein:
- the cull plate includes a plurality of through holes (4; 12), and
- at least one of the plurality of through holes (4; 12) includes only a tapered portion (4a) having an inner diameter gradually decreasing toward the upper surface of the cull plate (1), or a straight pipe portion (4b) having a constant inner diameter in a height direction.

## Patentansprüche

1. Verfahren zur Herstellung eines laminierten Kerns (2),
umfassend:
- Halten eines laminierten Kernkörpers (2), der auf einer Angussplatte (1) montiert ist, zwischen einem oberen Werkzeug (6b) und einem unteren Werkzeug (6c), die in einer Harzfüllvorrichtung (6) vorgesehen sind;
- Einspritzen eines Harzes (11) in ein Magneteinführloch (2a) des laminierten Kernkörpers (2) aus einem Harzreservoirteil (6a), das in dem unteren Werkzeug (6c) vorgesehen ist, durch einen Harzeinspritzweg (3) der Angussplatte (1); dann
- Auswerfen des laminierten Kernkörpers (2) und der Angussplatte (1) aus der Harzfüllvorrichtung (6); dann
- Trennen der Angussplatte (1) vom laminierten Kernkörper (2); und dann
- Ausstoßen des Harzes (11), das in dem Harzeinspritzweg (3) der Angussplatte (1) verfestigt ist,
wobei:
- die Angussplatte (1) mindestens ein Durchgangsloch (4; 12) umfasst, das mindestens einen Teil des Harzeinspritzwegs (3) bildet, der sich von dem Harzreservoirteil (6a) zu einer oberen Oberfläche der Angussplatte (1) erstreckt,
- das mindestens eine Durchgangsloch (4; 12) der Angussplatte (1) einen sich verjüngenden Abschnitt (4a) und einen geraden Rohrabschnitt (4b) umfasst, der an den sich verjüngenden Abschnitt (4a) angrenzt, wobei der sich verjüngende Abschnitt (4a) einen Innendurchmesser hat, der allmählich zur oberen Oberfläche der Angussplatte (1) hin abnimmt, und der gerade Rohrabschnitt (4b) einen konstanten Innendurchmesser in einer Höhenrichtung hat.

2. Verfahren zur Herstellung eines laminierten Kerns (2) nach Anspruch 1, wobei das mindestens eine Durchgangsloch (4; 12) ein Durchgangsloch (4) umfasst, aus dem das Harz (11), das aus dem Harzreservoirteil (6a) zu dem Magneteinführloch (2a) eingespritzt wird, zu dem Magneteinführloch (2a) abgegeben wird.

3. Verfahren zur Herstellung eines laminierten Kerns (2) nach Anspruch 2, wobei das mindestens eine Durchgangsloch (4; 12) ferner ein Sackloch (12) umfasst, in dem eine Austrittsöffnung durch den laminierten Kernkörper (2) in einem Fall verschlossen ist, in dem der laminierte Kernkörper (2) auf der Angussplatte (1) montiert ist.

4. Verfahren zur Herstellung eines laminierten Kerns nach einem der Ansprüche 1 bis 3, wobei die Angussplatte (1) durch Überlappen zweier Plattenelemente (1a, 1b) in vertikaler Richtung gebildet wird, wobei der sich verjüngende Abschnitt (4a) in einem der Plattenelemente (1a, 1b) ausgebildet ist, und der gerade Rohrabschnitt (4b) in dem anderen Plattenelement (1a, 1b) ausgebildet ist.

5. Verfahren zur Herstellung eines laminierten Kerns (2) nach einem der Ansprüche 1 bis 4, wobei:
- die Angussplatte (1) eine Vielzahl von Durchgangslöchern (4; 12) umfasst, und
- mindestens eines der Vielzahl von Durchgangslöchern (4; 12) nur einen sich verjüngenden Abschnitt (4a) mit einem Innendurchmesser, der allmählich zur oberen Oberfläche der Angussplatte (1) hin abnimmt, oder einen geraden Rohrabschnitt (4b) mit einem konstanten Innendurchmesser in einer Höhenrichtung umfasst.

6. Angussplatte (1),
- die konfiguriert ist, um in einem Verfahren nach einem der vorhergehenden Ansprüche verwendet zu werden und um zwischen einem laminierten Kernkörper (2) und einem unteren Werkzeug (6c) einer Harzfüllvorrichtung (6) in einem Vorgang gehalten zu werden, bei dem der laminierte Kernkörper (2) mit einem Permanentmagneten (5), der in ein Magneteinführloch (2a) eingesetzt ist, zwischen einem oberen Werkzeug (6b) und dem unteren Werkzeug (6c) der Harzfüllvorrichtung (6) gehalten wird, um ein Harz (11) aus einem Harzreservoirteil (6a) des unteren Werkzeugs (6c) in das Magneteinführloch (2a) einzuspritzen,
- die Angussplatte (1) mindestens ein Durchgangsloch (4; 12) umfasst, das mindestens einen Teil eines Harzeinspritzwegs (3) bildet, der sich von dem Harzreservoirteil (6a) zu einer oberen Oberfläche der Angussplatte (1) erstreckt,
wobei:
- das mindestens eine Durchgangsloch (4; 12) einen sich verjüngenden Abschnitt (4a) und einen geraden Rohrabschnitt (4b) umfasst, der an den sich verjüngenden Abschnitt (4a) angrenzt,
- der sich verjüngende Abschnitt (4a) einen Innendurchmesser hat, der allmählich zur oberen Oberfläche der Angussplatte (1) hin abnimmt,
- der gerade Rohrabschnitt (4b) in Höhenrichtung einen konstanten Innendurchmesser hat,
- die Angussplatte (1) zusätzlich einen Angusskanal (7) aufweist, der sich zu einer unteren Oberfläche der Angussplatte (1) hin öffnet und einen Teil des Harzeinspritzwegs (3) bildet, der sich von dem Harzreservoirteil (6a) durchgehend zu dem mindestens einen Durchgangsloch (4; 12) erstreckt,
- die Angussplatte (1) zwei Plattenelemente (1a, 1b) umfasst, die sich in vertikaler Richtung überlappen,
- der sich verjüngende Abschnitt (4a) in einem der Plattenelemente (1a, 1b) ausgebildet ist, und
- der gerade Rohrabschnitt (4b) in dem anderen Plattenelement (1a, 1b) ausgebildet ist.

7. Angussplatte (1) nach Anspruch 6, wobei das mindestens eine Durchgangsloch (4; 12) ein Durchgangsloch (4) umfasst, aus dem das Harz (11), das aus dem Harzreservoirteil (6a) zu dem Magneteinführloch (2a) eingespritzt wird, zu dem Magneteinführloch (2a) abgegeben wird.

8. Angussplatte (1) nach Anspruch 6, wobei das mindestens eine Durchgangsloch (4; 12) ferner ein Sackloch (12) umfasst, in dem eine Austrittsöffnung durch den laminierten Kernkörper (2) in einem Fall verschlossen ist, in dem der laminierte Kernkörper (2) auf der Angussplatte (1) montiert ist.

9. Angussplatte (1) nach einem der Ansprüche 6 bis 8, wobei:
- die Angussplatte (1) eine Vielzahl von Durchgangslöchern (4; 12) umfasst, und
- mindestens eines der Vielzahl von Durchgangslöchern (4; 12) nur einen sich verjüngenden Abschnitt (4a) mit einem Innendurchmesser, der allmählich zur oberen Oberfläche der Angussplatte (1) hin abnimmt, oder einen geraden Rohrabschnitt (4b) mit einem konstanten Innendurchmesser in einer Höhenrichtung umfasst.

## Revendications

1. Procédé de fabrication d'un noyau feuilleté (2),
comprenant :
- le maintien d'un corps de noyau feuilleté (2) monté sur une plaque de culot (1) entre une matrice supérieure (6b) et une matrice inférieure (6c) qui sont prévues dans un dispositif de remplissage de résine (6) ;
- l'injection d'une résine (11) dans un trou d'insertion d'aimant (2a) du corps de noyau feuilleté (2) à partir d'une partie de réservoir de résine (6a) prévue dans la matrice inférieure (6c) à travers un trajet d'injection de résine (3) de la plaque de culot (1) ; ensuite
- l'éjection du corps de noyau feuilleté (2) et de la plaque de culot (1) du dispositif de remplissage de résine (6) ; ensuite
- la séparation de la plaque de culot (1) du corps de noyau feuilleté (2) ; et ensuite
- l'éjection de la résine (11) solidifiée dans le trajet d'injection de résine (3) de la plaque de culot (1),
dans lequel :
- la plaque de culot (1) comprend au moins un trou traversant (4 ; 12) qui forme au moins une partie du trajet d'injection de résine (3) s'étendant de la partie de réservoir de résine (6a) à une surface supérieure de la plaque de culot (1),
- l'au moins un trou traversant (4 ; 12) de la plaque de culot (1) comprend une partie conique (4a) et une partie de tuyau rectiligne (4b) qui est adjacente à la partie conique (4a), dans lequel la partie conique (4a) a un diamètre interne diminuant progressivement vers la surface supérieure de la plaque de culot (1), et la partie de tuyau rectiligne (4b) a un diamètre interne constant dans une direction de hauteur.

2. Procédé de fabrication du noyau feuilleté (2) selon la revendication 1, dans lequel l'au moins un trou traversant (4 ; 12) comprend un trou de porte (4) à partir duquel la résine (11) injectée à partir de la partie de réservoir de résine (6a) dans le trou d'insertion d'aimant (2a) est évacuée vers le trou d'insertion d'aimant (2a).

3. Procédé de fabrication du noyau feuilleté (2) selon la revendication 2, dans lequel l'au moins un trou traversant (4 ; 12) comprend en outre un trou borgne (12) dans lequel un orifice d'évacuation est fermé par le corps de noyau feuilleté (2) dans un cas où le corps de noyau feuilleté (2) est monté sur la plaque de culot (1).

4. Procédé de fabrication du noyau feuilleté selon l'une quelconque des revendications 1 à 3, dans lequel la plaque de culot (1) est formée en superposant deux éléments de plaque (1a, 1b) dans une direction verticale, la partie conique (4a) est formée dans l'un des éléments de plaque (1a, 1b), et la partie de tuyau rectiligne (4b) est formée dans l'autre élément de plaque (1a, 1b).

5. Procédé de fabrication du noyau feuilleté (2) selon l'une quelconque des revendications 1 à 4, dans lequel :
- la plaque de culot (1) comprend une pluralité de trous traversants (4 ; 12), et
- au moins l'un de la pluralité de trous traversants (4 ; 12) comprend uniquement une partie conique (4a) ayant un diamètre interne diminuant progressivement vers la surface supérieure de la plaque de culot (1), ou une partie de tuyau rectiligne (4b) ayant un diamètre interne constant dans une direction de hauteur.

6. Plaque de culot (1),
- qui est configurée pour être utilisée dans un procédé selon l'une quelconque des revendications précédentes et pour être maintenue entre un corps de noyau feuilleté (2) et une matrice inférieure (6c) d'un dispositif de remplissage de résine (6) dans un procédé où le corps de noyau feuilleté (2) avec un aimant permanent (5) inséré dans un trou d'insertion d'aimant (2a) est maintenu entre une matrice supérieure (6b) et la matrice inférieure (6c) du dispositif de remplissage de résine (6) pour injecter une résine (11) à partir d'une partie de réservoir de résine (6a) de la matrice inférieure (6c) dans le trou d'insertion d'aimant (2a),
- la plaque de culot (1) comprenant au moins un trou traversant (4 ; 12) qui forme au moins une partie d'un trajet d'injection de résine (3) s'étendant de la partie de réservoir de résine (6a) à une surface supérieure de la plaque de culot (1),
dans laquelle :
- l'au moins un trou traversant (4 ; 12) comprend une partie conique (4a) et une partie de tuyau rectiligne (4b) qui est adjacente à la partie conique (4a),
- la partie conique (4a) a un diamètre interne diminuant progressivement vers la surface supérieure de la plaque de culot (1),
- la partie de tuyau rectiligne (4b) a un diamètre interne constant dans une direction de hauteur,
- la plaque de culot (1) comprend en outre un canal (7) qui s'ouvre vers une surface inférieure de la plaque de culot (1) et forme une partie du trajet d'injection de résine (3) s'étendant depuis la partie de réservoir de résine (6a) pour être continue jusqu'à l'au moins un trou traversant (4, 12),
- la plaque de culot (1) comprend deux éléments de plaque (1a, 1b) superposés dans une direction verticale,
- la partie conique (4a) est formée dans l'un des éléments de plaque (1a, 1b), et
- la partie de tuyau rectiligne (4b) est formée dans l'autre élément de plaque (1a, 1b).

7. Plaque de culot (1) selon la revendication 6, dans laquelle l'au moins un trou traversant (4 ; 12) comprend un trou de porte à partir duquel la résine (11) injectée à partir de la partie de réservoir de résine (6a) dans le trou d'insertion d'aimant (2a) est évacuée vers le trou d'insertion d'aimant (2a).

8. Plaque de culot (1) selon la revendication 6, dans laquelle l'au moins un trou traversant (4 ; 12) comprend en outre un trou borgne (12) dans lequel un orifice d'évacuation est fermé par le corps de noyau feuilleté (2) dans un cas où le corps de noyau feuilleté (2) est monté sur la plaque de culot (1).

9. Plaque de culot (1) selon l'une quelconque des revendications 6 à 8, dans laquelle :
- la plaque de culot comprend une pluralité de trous traversants (4 ; 12), et
- au moins l'un de la pluralité de trous traversants (4 ; 12) comprend uniquement une partie conique (4a) ayant un diamètre interne diminuant progressivement vers la surface supérieure de la plaque de culot (1), ou une partie de tuyau rectiligne (4b) ayant un diamètre interne constant dans une direction de hauteur.
